(19) Europäisches Patentamt
European Patent Office
Office européen des brevets

(11) Publication number: **0 109 008**
**B1**

(12) **EUROPEAN PATENT SPECIFICATION**

(45) Date of publication of patent specification: **03.12.86**

(51) Int. Cl.⁴: **C 08 L 21/02**, C 08 K 5/37, C 08 C 19/20

(21) Application number: **83110978.0**

(22) Date of filing: **03.11.83**

(54) **Stabilization of poly-(alkadiene-1,3).**

(30) Priority: **04.11.82 US 439164**
**05.11.82 US 439515**

(43) Date of publication of application:
**23.05.84 Bulletin 84/21**

(45) Publication of the grant of the patent:
**03.12.86 Bulletin 86/49**

(84) Designated Contracting States:
**DE FR GB**

(56) References cited:
**BE-A- 656 258**
**GB-A-1 575 115**

**CHEMICAL ABSTRACTS, vol. 54, no. 20, 25th October 1960, colonne 21821 h-i, Columbus, Ohio, US J.I. CUNNEEN et al.: "New methods of cross-linking natural rubber. I. The introduction of carboxylic acid and ester groups into natural rubber and their subsequent utilization for cross-linking"**

(73) Proprietor: **BORG-WARNER CHEMICALS INC.**
**International Center**
**Parkersburg West Virginia 26101 (US)**

(72) Inventor: **Wozny, John C.**
**P.O. Box 112**
**Coolville Ohio 45723 (US)**

(74) Representative: **Vossius & Partner**
**Siebertstrasse 4 P.O. Box 86 07 67**
**D-8000 München 86 (DE)**

**EP 0 109 008 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention of this application relates as indicated to the preparation of a stabilized poly(alkadiene-1,3). More particularly, it relates to such stabilization in aqueous emulsion.

While certain aqueous polymer emulsions are in many instances used as such, they often are used as a starting material in the preparation of a graft copolymer such as ABS. It is important for many applications that the ultimate graft copolymer product be as colorless and as stable as possible. These are difficult requirements for an ABS-type polymer because of the presence of a large number of olefinic double bonds in such a polymer. These double bonds are of course readily susceptible to oxidation which gives rise to color formation and other physical changes and which is a prime cause of instability. It is necessary to provide some means for preventing or inhibiting such oxidation so as to provide the desired color and thermal stability of the final copolymer product.

U.S. 4,213,892 (Scott) shows the stabilization of a polymer by reacting it with an antioxidant in the presence of a free radical. The antioxidant is one "which gives rise to a free radical in the molecule", col. 1, line 50. The reaction may be carried out in an aqueous emulsion, col. 6, line 29. In a typical example a polypropylene film is stabilized by irradiation in a solution of 3,5-ditertiarybutyl-4-hydroxybenzyl acrylate and benzophenone in benzene for 90 hours. The source of the irradiation is a UV lamp which radiates light of wave length above 250 mm. Although the preferred species of antioxidant is an acrylate which contains a phenolic group there is a disclosure of a saturated thiol as an antioxidant, for use with an unsaturated polymer. Nevertheless, there is no suggestion that aliphatic esters containing a thiol group might be effective to stabilize an alkadiene-1,3 polymer.

Cuneen et al., in J. Appl. Polymer Sci. *3,* No. 7, 11—19 (1960) show the reaction of natural rubber, in latex form, with mercapto acid esters. The reaction is catalyzed by a free-radical catalyst and is carried out at 0°C for at least 24 hours. The reaction medium is quite acid (pH: 1—2). The resulting product is hydrolyzed to the corresponding acid which then is cross-linked, through the carboxyl groups, by means of calcium hydroxide.

Dutch Patent Application No. 6,501,026, C.A. *64,* 6851 (1966), shows the stabilization of a polyolefin by dispersing it in an inert hydrocarbon with dodecyl mercaptopropionate and heating the mixture at 60—98° for 3—4 hours under UV irradiation. It does not show any such stabilization reaction in an aqueous emulsion, nor does it show the stabilization of an alkadiene-1,3 polymer.

U.S. 3,864,429 (Tanaka et al.) discloses high impact-resistant vinyl chloride polymer compositions which contain a modified MBS resin. The MBS resin is treated as an aqueous emulsion with an alkyl mercaptan.

The invention of the present application is a process for stabilizing an alkadiene-1,3 polymer comprising treating an aqueous emulsion of said alkadiene-1,3 polymer with from 0.001 percent to 10.0 percent based on mols of alkadiene-1,3 units in the polymer, of an aliphatic ester of the formula

$$HSCH_2CH_2COOR$$

where R is an alkyl group of 6—18 carbon atoms, in the presence of a radical-generating compound.

Alkadiene polymers contemplated for use in the process of this invention include chiefly polybutadiene, polyisoprene, and copolymers of butadiene and isoprene such as butadiene/styrene and butadiene/alphamethylstyrene copolymers. As indicated, the polymers are used in the form of aqueous emulsions and in the ordinary situation the aqueous emulsion in which the alkadiene polymer or copolymer is prepared is quite suitable for use in the process. The preparation of these polymers and copolymers in aqueuous emulsion is well-known and is, in fact, the usual method of their preparation.

The aliphatic ester which is in effect the stabilising agent is an alkyl mercaptopropionate having the structure shown above. The alkyl group contains 6—18 carbon atoms. Illustrative alkyl groups include hexyl, heptyl, octyl, 2-ethylhexyl, isooctyl, nonyl, decyl, dodecyl, tetradecyl, hexadecyl and octadecyl.

Radical-generating compounds are those which give rise to a fragment of a molecule having one or more unpaired electrons. Redox systems are particularly convenient, including mixtures of a cumene hydroperoxide plus iron, hydroperoxide plus a polyamine, a persulfate plus a reducing agent, etc. Azo compounds such as azoisobutyronitrile (AIBN) are useful; so are ditertiarybutyl peroxide, hydrogen peroxide, p-menthane hydroperoxide, and potassium persulfate. In general, peroxides, hydroperoxides, redox systems and azo compounds are suitable radical generators for the process herein.

The pH of the process mixture is desirably above 7.0 and preferably is within the range of from about 7.0 to about 11.0.

The temperature of the process mixture should be maintained within the range of from about 30°C to about 100°C. Obviously, the reaction will proceed at a higher rate at a higher temperature, but it ordinarily is unnecessary to heat the reaction mixture above 70°C to achieve a satisfactory reaction rate. An especially suitable range is from about 40°C to about 70°C. The optimum temperature will vary depending, e.g., on the initiator used.

The amount of alkyl 3-mercaptopropionate which should be used in the process of the invention will range from about 0.001 to about 10 percent, on a molar basis, with respect to the alkadiene-1,3 content of the polymer. Preferably, the concentration of alkyl 3-mercaptopropionate will be within the range of from

about 0.01 to about 3.0 percent on a molar basis. The effectiveness of the 3-mercaptopropionate residue, it will be seen, is not due (solely, at least) to the disappearance of double bonds in the butadiene units.

The radical-generating compound should be used in a concentration of from about 0.01 to about 1.0 percent of the polymer. Preferably the concentration should be within the range of from about 0.1 to about 0.5 percent.

The process of the invention and the improved properties of the product of that process are shown in the following examples and table.

Example 1

A mixture of 246 parts of polybutadiene latex containing 40.66% of polybutadiene having a weight average particle of 700 A°, 0.31 part of potassium persulfate ($K_2S_2O_8$) and 5 parts (1.0 molar percent) of dodecyl 3-mercaptopropionate is placed in a bottle, purged with argon and heated with agitation at 60°C for 22 hours. The resulting product mixture is coagulated with a 50—50 mixture of methanol and water containing 10% of concentrated sulfuric acid. The solid, crumblike product is reslurried with methanol (in which the dodecyl 3-mercaptopropionate is soluble), filtered and washed with more methanol. The rubbery crumb is dried *in vacuo* for six days, yielding a bright white product.

Example 2

The procedure of Example 1 is repeated except that the initial mixture contains no dodecyl 3-mercaptopropionate. The resulting product is a light beige color.

To each of the products prepared as in Examples 1 and 2 is added two phr (parts per hundred parts of resin) of 2,2'-bis-(hydroxy-3-tertiarybutyl-5-methylphenyl)methane (AO 425) dissolved in methanol. The mixture is stirred for an hour and then flash evaporated and the residue is vacuum dried for one day.

The thermal stability of each of the dried products is determined in an iso-DSC (Differential Scanning Calorimeter) apparatus at 200°C, i.e., (the Scanning Calorimeter) apparatus at 200°C, i.e., the sample is heated at this temperature until the onset of an exotherm, which indicates the beginning of decomposition of the test sample, and the time required for this occurrence is noted. The sample is retained in the apparatus at this same temperature for such additional time as required to develop a significantly increased color, a further indication of decomposition. The data from these tests is shown in Table I.

TABLE I

| | Product of Ex. 1 | Product of Ex. 2 |
|---|---|---|
| Initial color | white | light beige |
| Onset of exotherm | 96 min. | 42 min. |
| Development of color | light yellow after 110 min. | dark brown after 55 min. |

It will be seen that the product of Example 1 is more stable at elevated temperatures than the product of Example 2.

Graft copolymers may be prepared from the stabilized polymers of this invention by known methods such as (1) preparing a polymer latex (substrate) by polymerizing (in an aqueous emulsion) an alkadiene-1,3 or mixture thereof with styrene and up to 10% (based on monomer content of the latex) of acrylonitrile, (2) adding to said latex a mixture of styrene and up to 40% of acrylontirile and/or methyl methacrylate (based on monomer content of the added mixture) and (3) polymerizing the mixture of (2). Thus, the polymer latex of (1), for example, may be polybutadiene, polyisoprene, a copolymer of butadiene and styrene, or a copolymer of butadiene, styrene and acrylonitrile. As little as 15% and up to 70% of styrene, based on the overall monomer content, may be present in the graft copolymer; and the mixture of (2) may be styrene and acrylonitrile, styrene and methyl methacrylate, or styrene, acrylonitrile and methyl methacrylate. The butadiene content of the graft copolymer will range from about 10% to about 75%. Preferably the acrylonitrile content in the graft copolymer will be in the range of from about 2 to about 10 percent.

When the substrate contains styrene the styrene content thereof preferably is 2—30%. The styrene content of the superstrate range from about 15% to about 100%, while the preferred range is from about 15% to about 80%. The acrylonitrile and methyl methacrylate contents (in the superstrate) preferably are each from about 10% to about 40%.

The substrate normally will comprise from about 15% to about 60% of the graft copolymer and the superstrate from about 85% to about 40% thereof.

Cross-linking agents can be used both in the above process. They may be used both in the step of preparing the latex and in step (3) involving preparation of the superstrate. Illustrative cross-linking agents include divinylbenzene, and dimethacrylates such as mono-di-, tri- and tetraethylene glycol dimethacrylate and 1,3-butylene glycol dimethacrylate, triallyl phosphate, triallyl cyanurate, tetraallyl silane, diallyl itaconate, diethylene glycol diacrylate, etc.

Methods of making the graft copolymers herein are well known. U.S. 2,802,808 (Hayes), for example, shows methods of preparing ABS resins, as does also U.S. 2,994,683 (Calver). The MBS resins and other graft copolymers herein are prepared similarly.

Preferred graft copolymers are those wherein the superstrate, i.e., the grafted polymer, is a copolymer of styrene and acrylonitrile and the substrate is polybutadiene. Another preferred species is an MABS resin, i.e., one where the superstrate is a grafted copolymer of acrylonitrile, methyl methacrylate and styrene. Still another preferred species (MBS) is prepared by copolymerizing styrene and methyl methacrylate in the presence of polybutadiene (as the substrate).

A particularly preferred graft copolymer is one wherein a copolymer of from about 70 parts to about 90 parts of styrene and from about 10 parts to about 30 parts of methyl methacrylate is grafted onto a polybutadiene substrate.

The product of the process herein, i.e., the stabilized alkadiene polymer, is especially useful as a substrate in the preparation of graft copolymers. An ABS copolymer prepared from such a substrate, for example, is characterized by improving thermal stability. The data set out in Tables III show IV this.

## Example 3

Two batches of an ABS graft copolymer were prepared each according to the following recipe:

| Grams | |
|---|---|
| 50.0 | Polybutadiene |
| 0.2 | Potassium thiosulate |
| 0.25 | Tertiary-Dodecyl Mercaptan |
| 1.0 | Dresinate 731 |
| 35.0 | Styrene |
| 15.0 | Acrylonitrile |
| 233.0 | Total Water |

The first batch (No. 1) utilized an aqueous emulsion of polybutadiene (prepared) as in Example 1) which had been treated with 5 parts of dodecyl 3-mercaptopropionate per 100 parts of polybutadiene; the second batch (No. 2) utilized an aqueous emulsion of polybutadiene which was not so treated. Each batch was heated with agitation at 60°C for four hours, then acid coagulated.

## Example 4

Two additional batches of ABS graft copolymer were prepared according to the following recipe:

| Grams | |
|---|---|
| 20.0 | Polybutadiene |
| 0.15 | Tertiary Dodecyl Mercaptan |
| 1.25 | Dresinate 731 |
| 51.4 | Styrene |
| 28.6 | Acrylonitrile |
| 180.0 | Total Water |
| 0.55 | Dextrose |
| 0.004 | $FeSO_4$ $7H_2O$ |
| 1 drop | Sulfuric Acid |
| 0.02 | Tetrasodium Pyrophosphate |
| 0.40 | Cumene Hydroperoxide |

The first batch (No. 3) utilized an aqueous emulsion of polybutadiene (prepared as in Example 1) which had been treated with 5 parts of dodecyl-3-mercaptopropionate per 100 parts of polybutadiene; the second batch (No. 4) utilized an aqueous emulsion of polybutadiene which was not so treated. Each batch was heated with agitation at 60°C for 1.25 hours, then acid coagulated.

Analyses of the ABS graft copolymers obtained from these four batches showed the following:

TABLE II

| | No. 1 | No. 2 | No. 3 | No. 4 |
|---|---|---|---|---|
| %Monomer Conversion (based on total solids) | 95.23 | 97.23 | 92.36 | 92.18 |
| % Acetone insoluble | 75.3 | 75.9 | 37.5 | 34.3 |
| Est. $M_N$ (GPC) of rigid SAN | 58,000 | 68,000 | 63,000 | 66,000 |
| Est. $M_N$ (GPC) of grafted SAN | 71,000 | 71,000 | 71,000 | 74,000 |
| A:B:S ratio of whole polymer | 15:51:34 | 15:51:34 | 26:20:54 | 26:20:54 |
| A:S ratio of soluble phase | 33:67 | 32:68 | 33:67 | 33:67 |
| A:B:S ratio of insoluble phase | 10:65:25 | 9:69:22 | 11:65:24 | 11:65:24 |

The above data show that the incorporation of the dodecyl-3-mercaptopropionate in the polybutadiene molecule has no adverse effect on the subsequent grafting reaction with styrene and acrylonitrile. That is, suitable ABS copolymers can be prepared in the normal manner from the stabilized alkadiene-1,3 polymers of this invention.

Moreover, the ABS copolymers thus prepared are characterized by increased thermal stability as shown by relative iso-DSC values. These are set out in Table III and are obtained by heating the sample at a given temperature (190°C and 200°C in these instances) until the onset of an exotherm. Test samples Nos. 1—4 correspond to those shown in Table II. Test samples nos. 2A and 4A differ from nos. 2 and 4 in that they each contain an amount of dilaurylthiodipropionate, 5.0 and 2.0 parts, respectively, per 100 parts of ABS resin which is equal to the number of mols of dodecyl 3-mercaptopropionate in Nos. 1 and 3. Also, test samples Nos. 1, 2 and 2A each contain 0.1 pph of AO 425 and test samples 3, 4 and 4A each contain 0.4 pph of AO 425.

TABLE III

| Sample | Temperature | Time (mins.) |
|---|---|---|
| No. 1 | 190°C | 104 |
| No. 2 | 190°C | 21 |
| No. 2A | 190°C | 90 |
| No. 3 | 200°C | 77 |
| No. 4 | 200°C | 25 |
| No. 4A | 200°C | 48 |

The above data show the superior thermal stability of an ABS pepared from the alkyl 3-mercaptopropionate-treated polymers herein (Nos. 1 and 3) with respect to ABS prepared from untreated polymers (Nos. 2 and 4) and from untreated polymers containing an additive of similar structure (Nos. 2A and 4A).

Example 5

A mixture of 246 parts of polybutadiene latex containing 40% of polybutadiene having a weight average particle size of 3000 A°, 1.0 phr (parts per hundred parts of resin) of dodecyl 3-mercaptopropionate and 0.08 phr of 2,2'-azobis-(2,4-dimethyl-4-methoxyvaleronitrile) is warmed at 100°F for ten days in a tray drier.

The resulting polybutadiene latex is converted to an ABS resin according to the procedure of Example 4 except that the styrene contains 0.14 phr of 2,2'-bis-)hydroxy-3-tertiarybutyl-5-ethylphenyl)methane and 0.45 phr of tri-(nonylphenyl)phosphite, and the process is carried out in a continuous manner.

The enhanced thermal stability of the product of Example 5 is shown by the data in Table IV. The data is obtained in terms of iso-DSC and DSC valves, the blank being an ABS resin prepared as in Example 5 except that the polybutadiene from which it is prepared is not previously reacted with dodecyl 3-mercaptopropionate. The iso-DSC valves (minutes) are obtianed at 190°C and the DSC valves are the temperatures at which the samples decompose.

TABLE IV

| | Iso-DSC (min. at 190°C) | DSC (°C) |
|---|---|---|
| Blank | 0 | 203°C |
| Product of Ex. 5 | 33.5 | 237°C |

All parts and percentages herein, unless otherwise specifically stated, are by weight.

**Claims**

1. A process for stabilizing an alkadiene-1,3 polymer comprising treating an aqueous emulsion of said alkadiene-1,3 polymer with from 0.001 percent to 10 percent based on mols of alkadiene-1,3, of an aliphatic ester of the formula

$$HSCH_2CH_2COOR$$

where R is an alkyl group of 6—18 carbon atoms, in the presence of a radical-generating compound.

2. The process of Claim 1, wherein the alkadiene-1,3 polymer is polybutadiene.

3. The process of Claim 1, wherein the alkadiene-1,3 polymer is polyisoprene.

4. The process of Claim 1, wherein the aliphatic ester is dodecyl-3-mercaptopropionate.

**Patentansprüche**

1. Verfahren zur Stabilisierung eines Alkadien-1,3-polymerisates durch Behandlung einer wäßrigen Emulsion des Alkadiene-1,3-polymerisates mit 0,001 bis 10%, bezogen auf die Molzahl Alkadien-1,3, eines aliphatischen Esters der Formel

$$HSCH_2CH_2COOR$$

in der R einem Alkylrest mit 6 bis 18 Kohlenstoffatomen darstellt, in Gegenwart einer Radikale erzeugenden Verbindung.

2. Verfahren nach Anspruch 1, wobei das Alkadiene-1,3-polymerisat Polybutadien ist.

3. Verfahren nach Anspruch 1, wobei das Alkadien-1,3-polymerisat Polyisopren ist.

4. Verfahren nach Anspruch 1, wobei der aliphatische Ester Dodecyl-3-mercaptopropionat ist.

**Revendications**

1. Procédé pour stabiliser un polymère d'alcadiène-1,3 comprenant le traitement d'une émulsion aqueuse dudit polymère d'alcadiène-1,3 avec de 0,001% à 10% bsés sur les moles d'alcadiène-1,3 d'un ester aliphatique répondant à la formule:

$$HSCH_2CH_2COOR$$

dans laquelle R est un groupe alkyle contenant 6 à 18 atomes de carbone, en présence d'un composé générateur de radicaux.

2. Procédé selon la revendication 1, dans lequel le polymère d'alcadiène-1,3 est le polybutadiène.

3. Procédé selon la revendication 1, dans lequel le polymère d'alcadiène-1,3 est le polyisoprène.

4. Procédé selon la revendication 1, dans lequel l'ester aliphatique est le dodécyl-3-mercaptopropionate.